# EUROPEAN PATENT SPECIFICATION

(11) **EP 3 410 238 B1**
(45) Date of publication and mention of the grant of the patent: **15.02.2023**
(21) Application number: 17174161.4
(22) Date of filing: 02.06.2017
(51) Int. Cl.: G05B 15/02, H04W 84/20

(54) **GROUPING OF ACTORS IN A BUILDING AUTOMATION SYSTEM**
GRUPPIERUNG VON AKTUATOREN IN EINEM GEBÄUDEAUTOMATISIERUNGSSYSTEM
GROUPAGE D'ACTUATEURS DANS UN SYSTÈME D'AUTOMATISATION DE BÂTIMENT

(43) Date of publication of application: 05.12.2018
(73) Proprietor: Siemens Schweiz AG, 8047 Zürich (CH)
(72) Inventor: BAUMANN, Urs, 6331 Hünenberg (CH); BRUN, Gerhard, 6006 Luzern (CH); HOFER, Remy, 6280 Hochdorf (CH)
(74) Representative: Maier, Daniel Oliver

(56) References cited:
- EP-A1- 2 053 787
- EP-A2- 2 043 298
- WO-A1-2013/144307
- US-A1- 2013 218 349
- US-B1- 7 937 167

## Description

### FIELD OF THE INVENTION

The present invention relates generally to the technical field of building management systems or building automation systems comprising a plurality of building devices, e.g. BACnet devices. In particular the present invention relates to a method and a system for providing an operating and monitoring mechanism for a group of actors in a building automation system. Furthermore the present invention relates to an operating and monitoring mechanism for a group of actors in a building automation system.

### BACKGROUND

A building automation system is an arrangement for monitoring, open-loop control, and/or closed-loop control of process variables in complex technical systems in a building, or in a campus comprising a number of buildings. A building automation system typically operates heating, ventilation and air-conditioning systems, lighting and shading devices and also access control, security and fire surveillance systems. In the building automation system, process variables - such as room air conditioning variables or events, for example - are detected, evaluated, monitored, influenced or generated, with the energy consumption of the building or campus also advantageously being optimized by the building automation system.

Generally, a building automation system encompasses and operates a plurality of field devices, e.g. implemented as BACnet devices, such as sensors and actuators. Examples of typical field devices are temperature and humidity sensors, air quality sensors, pressure sensors, flow meters, electricity meters, heat meters, brightness sensors, fire alarms, intrusion alarms, alarm or sprinkler devices, drives for hot water valves, thermostat valves, ventilation flaps or blinds, light switches, smart card readers or devices for detecting biometric data. The building automation system typically comprises a plurality of software modules, processes or programs, and in general, a number of computers or processors for their activation and also as a rule a plurality of open-loop and closed-loop control devices as well as further devices, for example devices for linking the building automation system to external communication networks and graphical user interfaces having screens for viewing and analysis of captured signals, video and data from monitored and/or controlled points or elements within the building automation system.

The American application US2013/218349A1 and the International Application WO2013/144307A1 are in the same patent family and are disclosing in each case a system and a method for communicating common data associated with building automation objects between building automation devices across a network. The common data corresponds to a group of one or more building automation objects representing points associated with a plurality of field devices controlled or monitored in a building by the building automation devices.

The European application EP2053787A1 discloses a system for entropy-based stability management, the system comprising: a processor in a network executing a stability agent to collect stability information from a plurality of nodes on the network and to determine a relative dependability between and among the plurality of nodes, and to calculate a level of stability of each of the plurality of nodes and network, wherein the level of stability is calculated using entropy-based statistical methods; and an operational agent running on at least on node on the network, the operational agent to receive the stability information from the stability agent and to provide management and control operations to at least one aspect of the network, based on the stability information.

The European application EP2043298A2) is disclosing a system and a method relating to a framework to build a new class of network control (policy) and (state) management services. The framework may be used to build a number of self-management services to support decentralized (mesh) networks. In at least one embodiment, the present invention is intended to hybridize centralized and decentralized network models to generate a more stable and robust network environment using clustering.

The American patent US7937167B1 is disclosing an algorithm to enable sensor nodes in a sensor network to adaptively selfconfigure into sensor clusters to provide a desired higherlevel functionality.

In building automation systems, there is sometimes the requirement to control a group of actuators (e.g. lamps or blinds) by a single control element. In the area of building automation grouping mechanisms for grouping objects are known, for instance for grouping KNX objects (KNX is a fieldbus standard for building automation) or for DALI objects (Digital Addressable Lighting Interface). Grouping could also be accomplished by wiring actuator objects. These grouping mechanisms are specific regarding the used technology and have further drawbacks, e.g. no feedback from the actuators in the field to the respective control element or, when a group master is defect, the whole group can no longer be controlled.

### SUMMARY OF THE INVENTION

The object of the invention is to provide a grouping mechanism which is technology-independent and can also be used e.g. for BACnet objects.

This object will be achieved by a method according to claim 1.

The object will be furthermore achieved by a computerized system according to claim 7.

### BRIEF DESCRIPTION OF THE DRAWINGS

The above-mentioned and other concepts of the present invention will now be addressed with reference to the drawings of the preferred embodiments of the present invention. The shown embodiments are intended to illustrate, but not to limit the invention. The drawings contain the following figures, in which like numbers refer to like parts throughout the description and drawings and wherein:
- FIG 1: illustrates an exemplary flow chart for a method for providing an operating and monitoring mechanism for a group of actors in a building automation system;
- FIG 2: illustrates the selection of a building automation object as a group master object (speaker) in an exemplary overview diagram;
- FIG 3: illustrates in a first exemplary scenario the dereferencing of one semantic tag to one reference to a BA-Object;
- FIG 4: illustrates in a second exemplary scenario the assigning of a widget for operating and monitoring to a referenced BA-Object;
- FIG 5: illustrates in a third exemplary scenario the dereferencing of N semantic tags to a list of N references to a BA-Object;
- FIG 6: illustrates in a fourth exemplary scenario the assigning of a widget for operating and monitoring to N referenced BA-Objects;
- FIG 7: shows an example for applying the speaker (group master) selection algorithm; and
- FIG 8: shows an exemplary computerized system for providing an operating and monitoring mechanism for a group of actors in a building automation system.

### DETAILED DESCRIPTION

Today building automation objects or field devices of a building automation system are widely dispersed throughout a facility or even in different facilities. For example, an HVAC system includes temperature sensors and ventilation damper controls as well as other elements that are located in virtually every area of a facility. Similarly, a security system may have intrusion detection, motion sensors and alarm actuators dispersed throughout an entire building or campus.

Likewise, fire safety systems include smoke alarms and pull stations dispersed throughout the facility. To achieve efficient and effective building automation system operation, there is a need to monitor the operation of, and often communicate with, the various dispersed building automation objects or field devices of a building automation system.

Electrical or wireless communication media are used in a building automation system for the exchange of data of individual devices or parts of systems, as a rule a number of communication networks exist, with cables, optical data communication channels, ultrasound connections, electromagnetic near field or radio networks able to be used, including fiber optic networks or cellular networks for example. Examples of technologies or standards able to be used for the said data exchange are BACnet, LON from the company ECHELON, KNX, ZigBee or PROFIBUS defined by German standard DIN 19245. BACnet refers to the ANSI/ASHRAE 135-2016 building communication protocol standard, titled "BACnet, A Data Communication Protocol for Building Automation and Control Networks" (2016).

Building automation systems typically have one or more control stations in which data from each of the dispersed building automation objects or field devices in the system may be monitored and in which various aspects of system operation may be controlled and/or monitored. The control station typically includes a computer having processing equipment, data storage equipment, and sometimes a user interface. To allow for monitoring and control of the dispersed building automation objects or field devices, building automation systems often employ multi-level communication networks to communicate operational and/or alarm information between operating elements, such as sensors and actuators, and the control stations.

Building automation objects (BA objects) are corresponding to field devices employed in a building automation system. In building automation systems field panels, controllers, and sub-controllers may each comprise a control program and a building automation (BA) object model or database, which the control program of the respective field panel, controller, or sub-controller is configured to access. Each BA object model or database may comprise one or more building automation objects (also referred to as BA objects) that model or function as a proxy for an input or an output of a field device or other point of the building that is monitored and/or controlled by the automation system.

Access to the building automation objects that corresponds to field devices under the control of a respective building automation device, such as field panels, controller, or sub-controllers, typically requires coordination by a central control function of one of the control programs employed in the building automation devices employed in the building automation system. In particular, individual room automation and control by the building automation system for a building or campus of buildings typically involves a large number of entities such as: rooms within the building (or "building spaces") requiring separate temperature sensors, HVAC equipment (such as radiators, chilled ceilings, VAV boxes, fan coils), blind actuators and/or lighting actuators. Central control functions implemented by the control programs of the business automation devices allow and support centrally controlling and coordinating a set of arbitrary entities, such as points or BA objects corresponding to the field devices.

One example of a building automation system control station is the APOGEE^{®} INSIGHT^{®} Workstation, available from Siemens Industry, Inc. of Buffalo Grove, Ill., which may be used with the model APOGEE^{®} building automation system, also available from Siemens Industry, Inc. (APOGEE and INSIGHT are U.S federally registered trademarks of Siemens Industry, Inc.)

BACnet is a communications protocol for building automation and control networks. It is an ASHRAE, ANSI, and ISO 16484-5 standard protocol. BACnet allows communication of building automation and control systems for applications such as heating, ventilating, and air-conditioning control (HVAC), fire and security systems, energy management, lighting control, physical access control, and elevator monitoring systems including their associated equipment. The BACnet protocol provides mechanisms for computerized building automation devices to exchange information, regardless of the particular building service they perform (see definition in Wikipedia).

A BACnet device implements the BACnet protocol through which the device can communicate. For connection to the network, a BACnet device implements at least one of the data link and physical layer options defined for BACnet, with BACnet over IP being the dominant standard option today. The information accessible through this protocol is formatted as BACnet objects. The set of standard and proprietary BACnet objects in a BACnet device represents the functionality of that device. BACnet devices may be sensors, actuators, controllers, and also workstations.

A BACnet network is set of BACnet devices that interconnect to each other using one of the data link and physical layer options defined for BACnet. All connected BACnet devices of a BACnet network can communicate to each other in a peer-topeer fashion. Multiple BACnet networks maybe interconnected using BACnet Routers, allowing BACnet devices to communicate with other BACnet devices on other BACnet networks that may use a different data link and physical layer option even.

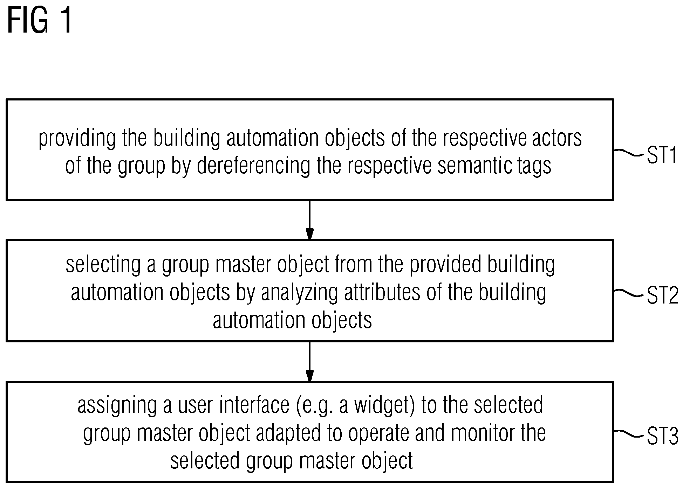

Figure 1 illustrates an exemplary flow chart for a method for providing an operating and monitoring mechanism for a group of actors in a building automation system, wherein an actor is represented by a building automation object, wherein a building automation object comprises semantic tags, characterizing an actor in each case. The method comprises the steps:
(ST1) providing the building automation objects of the respective actors of the group by dereferencing the respective semantic tags;
(ST2) selecting a group master object (speaker of the group) from the provided building automation objects by analyzing attributes of the building automation objects;
(ST3) assigning a user interface (e.g. a widget) to the selected group master object adapted to operate and monitor the selected group master object. The method can be performed by a processing unit (e.g. Laptop, PC, Workstation, control station, controller) comprising suitable input-/output means (e.g. keyboard, mouse, monitor), memory (e.g. data base), and suitable software programs. This IT infrastructure is normally part of a building automation system.

Operating and/or controlling the comfort status in a room sometimes a user requires to operate and/or control a group of physically independent actors (e.g. a group of lights or a group of blinds). The inventive method enables a user to operate and/or control a group of physically independent actors by a single control element. Advantageously the single control element is provided on a user interface of a control device (e.g. room controller). Also a mobile communication device (e.g. smart-phone, notebook, tablet computer) can act as a control device. In this case the mobile communication device comprises suitable software programs (e.g. a downloaded app). For instance the single control element is provided on the user interface of the control device or the mobile communication device as a widget or a soft-key. Widgets are easy to use and easy to understand components or control elements (e.g. graphical control elements) to operate and/or control relatively simple applications or instructions.

The single control element operates and/or controls the selected group master object (speaker) of the group of actors. The instructions which are provided by the single control element to the group master object are also applied to the further group members. This means that with one control element on the user interface of a control device or a mobile communication device a user can operate and/or control the whole group of actors. For a user intervention only one visualization (one control element, one widget) is necessary.

In the case the group master object is defect or faulty automatically a new group master object will be selected.

Advantageously the selection of the group master object (speaker of the group) is based on analyzing at least a subset of the attributes: status flags, reliability, or present priority. Advantageously the selection of the group master object (speaker of the group) is based on analyzing all of the attributes: status flags, reliability, and present priority.

The attribute "status flags" (e.g. error) is a defined bit set in the BACnet standard. The attribute "reliability" comprises the values: no fault, sensor broken, etc. The attribute "present priority" comprises an array of possible priorities (e.g. highest priority (prio 1; for instance when a storm is expected to approach), user intervention (prio 8), lowest priority 16. Also the attributes "reliability" and "present priority" are BACnet properties.

It is possible that the selection of the group master object (speaker of the group) is based on user defined attributes building automation objects.

Advantageously the selection is furthermore based on analyzing the physical status (e.g. sensor broken) and/or the applicative status of the respective actors (e.g. status flags, priority). Optionally the selection can be based only on analyzing the physical status and/or the applicative status of the actors in the respective group.

Advantageously the method is performed during runtime automatically. The steps for performing the method are permanently executed by a processing unit of a controller of a runtime-environment. The controller determines permanently the current group master object (speaker of the group of building automation objects). Not the first building automation object which fits will be selected as group master object, but rather the best. The selection is independent of the underlying technology (especially by using the property "reliability" as attribute).

Advantageously the user interface is realized by a widget. "A software widget is a relatively simple and easy-to-use software application or component made for one or more different software platforms. A desk accessory or applet is an example of a simple, stand-alone user interface, in contrast with a more complex application such as a spreadsheet or word processor. These widgets are typical examples of transient and auxiliary applications that don't monopolize the user's attention. On the other hand, graphical control elements (GUI "widgets") are examples of reusable modular components that are used together to build a more complex application, allowing programmers to build user interfaces by combining simple, smaller parts" (Wikipedia).

### Advantages of the inventive method are especially:

- The selection of a group master object is independent of the underlying technology. This means independent of BACnet, Dali, or Konnex (KNX), etc.
- The group master object (speaker) will be dynamically and permanently selected at runtime, based on objective criteria.
- As criteria subsystem- independent and technology-independent BACnet specific quality attributes (BACnet object properties) can be used.
- Writing to the group master object is secure and reliable, since the business logic secures that all group members will receive commands.
- The selection of a group master object is performed on an abstraction layer higher than the common Konnex- or Dali-Speaker-algorithms.
- Not the first fit, but the best fit of available group members will be selected as the group master (speaker).

Further advantageous embodiments of the invention are a nontransient computer-readable medium (e.g. CD, SSD or USB stick) and a computer program product (e.g. a program module written in an adequate programming language, e.g. C++, Java) comprising instructions for performing the inventive method for providing optimization or improvement measures for one or more buildings. The computer-readable medium and the computer program product having program segments for, when executed on a computer device, causing the computer device (e.g. workstation, desktop computer, Laptop, tablet) to implement the inventive method. The computer program product is directly or indirectly loadable into the memory of a digital computer or controller.

Computer readable media can be any available media that can be accessed by a computer. By way of example, and not limitation, computer readable media can exemplary comprise computer storage media and communication media. Computer storage media comprises volatile and non volatile as well as removable and non-removable media implemented in any method or technology for storage of information such as computer readable instructions, data structures, program modules or other data. Computer storage media for example comprises RAM, ROM, EEPROM, flash memory or other memory technology, CDROM, digital versatile disks (DVD) or other optical disk storage, or any other medium which can be used to store the desired information and which can be accessed by a computer or controller.

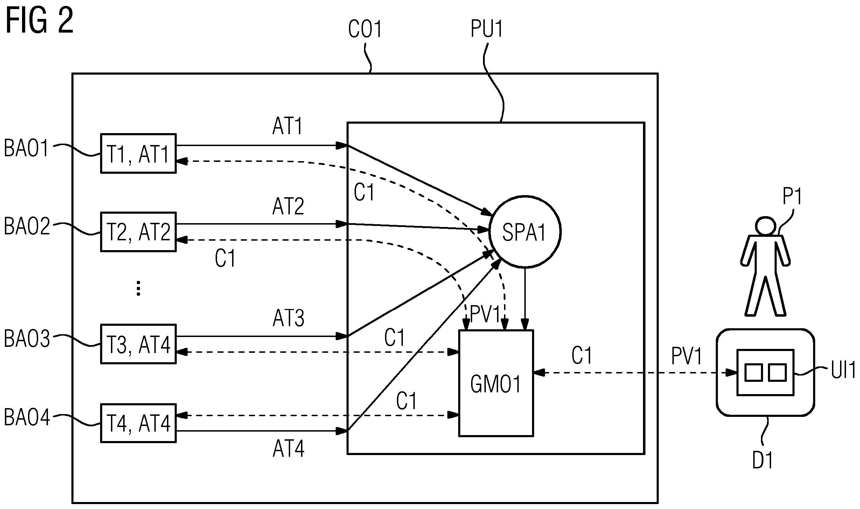

Figure 2 illustrates the selection of a building automation object as a group master object GMO1 (speaker) out of the building automation objects BAO1 - BAO4 in an exemplary overview diagram. According to the semantic tags T1 to T4 the group of building automation objects BAO1 - BAO4 of respective actors was generated by dereferencing the respective semantic tags T1 to T4. From the group of provided building automation objects BAO1 - BAO4 the speaker algorithm SPA1 is selecting a group master object GMO1 by analyzing attributes AT1 to AT4 of the building automation objects BAO1 - BAO4. Attributes AT1 to AT4 are for instance status flags (defined BACnet bit-set; e.g. fault), reliability (set of faults; e.g. number of faults, no fault, sensor broken, etc), or present priority (array of priorities (1 to 16); e.g. "1" for highest priority (e.g. a hurricane is approaching), "8" for user action, "16" for lowest priority. Advantageously the attributes AT1 - AT4 are also BACnet properties.

The speaker algorithm SPA1 is implemented as a software program running on a processing unit PU1 of a computer (e.g. Personal Computer, Workstation, Server). The computer comprises input means (e.g. keyboard, mouse), output means (e.g. display), and memory. The speaker algorithm SPA1 is assigning a user interface UI1 (e.g. a widget) to the selected group master object GMO1. The user interface UI1 can be provided on the display D1 of a room control unit (which is assigned to a room, a floor, or a part of a building), a panel (e.g. field panel), or on a mobile communication device (e.g. smart phone) of a user P1. Advantageously the user interface UI1 is provided as a widget. The user interface UI1 is adapted to operate and monitor the selected group master object GMO1 by respective commands C1 (e.g. open blinds or close blinds). The user interface UI1 can also be provided on the displays of different devices at the same time.

A user P1 inputs a command C1 (e.g. "close blinds") via the user interface UI1 to operate a group of actors (e.g. blinds or lights), which are represented by building automation objects BAO1 - BAO4. The group master object GMO1 (selected by the speaker algorithm SPA1) receives the command C1 and forwards the command C1 (e.g. "close blinds") to all building automation objects BAO1 - BAO4 of the respective group. When receiving the command C1 (e.g. "close blinds") the building automation objects BAO1 - BAO4 trigger the actors which are represented by them to execute the command C1.

In the arrangement shown in Figure 2, the processing unit PU1 can be part of or realized in a computer, a general-purpose data processing system, or a BAS controller CO1 such as a PXC programmable controller commercially available from Siemens Industry, Inc. or Siemens Schweiz AG (collectively "Siemens") .

In the exemplary arrangement shown in Figure 2 the building automation object BAO1 is selected as group master object GMO1 from the group of building automation objects BAO1 to BAO4 by applying the speaker algorithm SPA1. When the user P1 sends a command C1 to the group master object GMO1 this command C1 will be applied to all building automation objects BAO1 - BAO4 of the group.

The group master object GMO1 is representing the group also regarding visualizing the status and/or present value PV1 of the group. The status and the present value PV1 of the group master object GMO1 is showing the status and the present value of the whole group. The current present value PV1 of the building automation object BAO1 will be provided on the user interface UI1 to represent the present value of the whole group of building automation objects BAO1 to BAO4.

If the building automation object BAO1 is defect, the speaker algorithm SPA1 is selecting automatically another building automation object from the group to act as group master object.

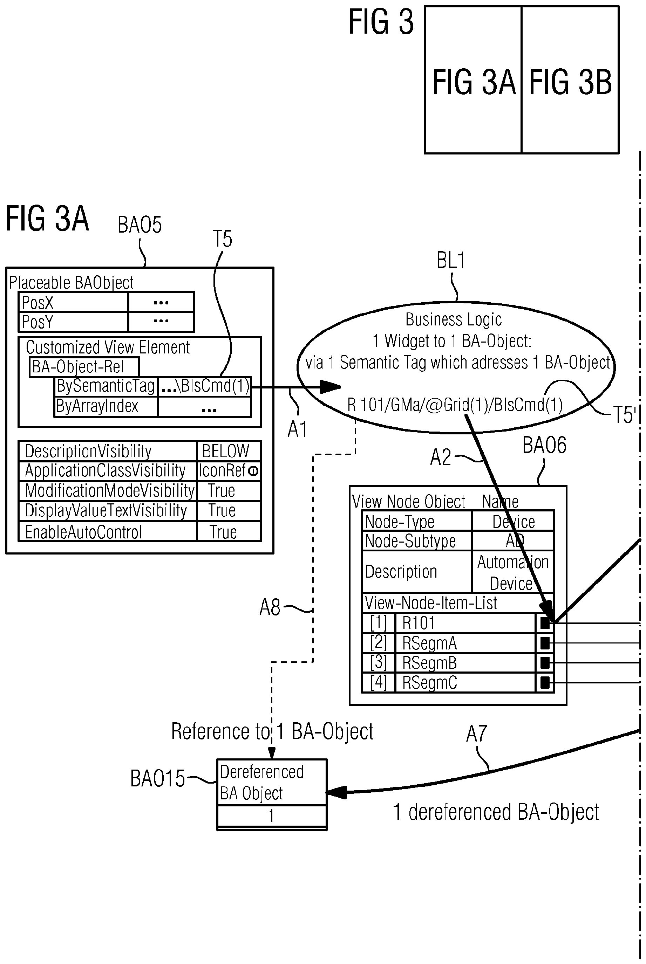

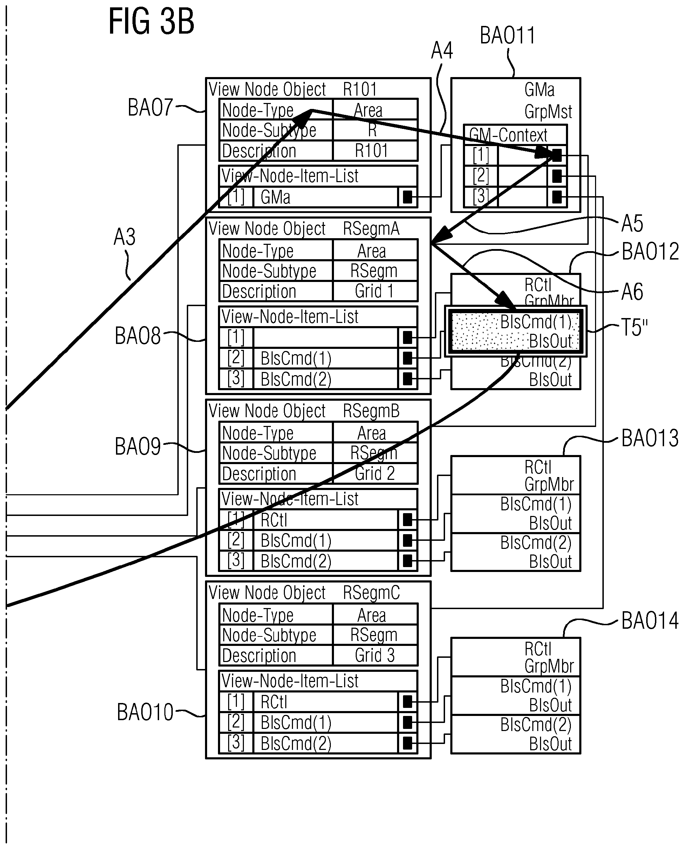

Figure 3 illustrates in a first exemplary scenario the dereferencing of one semantic tag T5, T5' , T5" ("...\BlsCmd(1)") to one reference to a BA-Object BAO15. In the exemplary illustration shown in figure 3 the Business Logic BL1 dereferences one semantic tag T5,T5',T5" to one reference to the BA-Object BAO15.

In figure 3 the placeable building automation object (BA-Object) BAO5 can be positioned on a display of a device, e.g. room control unit, to provide a user interface to operate a dereferenced BA-Object. The placeable BA-Object BAO5 comprises engineered data.

The engineered data of the placeable BA-Object BAO5 comprise:
- position information (Pos X, Pos Y) which represent coordinates where to locate the BA-Object BAO5 on a display;
- parameters for the visual representation (Description-Visability (e.g. Below), ApplicationClassVisability (e.g. IconRef), ModificationModeVisability (e.g. True), DisplayValueTextVisability (e.g. True). Enable AutoControl (e.g. True));
- Customized View Element for BA-Object-Relations (BA-Object-Rel). BA-Object-Relations can be created by semantic tags (BySemanticTag (e.g. "...\BlsCmd(1)" T5) or by an array index (ByArrayIndex).

A placeable BA-Object is representing the user interface (e.g. widget) to monitor and/or operate the respective actors.

In the illustration according to figure 3 the BA-Object-Rel:: BySemantic Tag of the CustomizedViewElement of the according template is applied to the chosen room (e.g. Room 101) and a reference to ONE BA-Object BAO15 is used by the widget to operate and monitor this BA-Object BAO15.

In the exemplary scenario illustrated in figure 3 the arrows A2 - A6 represent a path to business logic elements, to building automation objects, or to parameters of building automation objects. The sequence of arrows A2 - A6 is resolving the semantic tag T5' in the business logic BL1 and finally providing the BA-Object BAO12. BA-Object BAO12 corresponds to BA-Object BAO15 (illustrated by arrow A7). After dereferencing the sequence of arrows A2 - A6, the BA-Object BAO15 will be used in the business logic BL1 (arrow A8).

The semantic tag T5 "...\BlsCmd(1)" of BA-Object BAO5 points with the arrow A1 to the semantic tag T5' "R 101/GMa/@Grid(1) /BlsCmd(1)" which is used in the business logic BL1 "1 widget to 1 BA-Object". The information "R 101" (Room 101) of the semantic tag T5' points (arrow A2) to the parameter "R101" of the View-Node-Item-List of BA-Object BAO6 which is a View Node Object and is representing a root object (e.g. a controller) .

View Node Objects comprise as parameters (tags, attributes, etc.:
- Name;
- Node-Type (e.g. Device);
- Node-Subtype (e.g. AD, automation device) ;
- Description (e.g. Automation Device) ;
- View-Node-Item-List (links to related BA-Objects, e.g. room 101 (R101)).

The parameter R101 in the View-Node-Item-List of BA-Object BAO6 points (arrow A3) to BA-Object BAO7. BA-Object BAO7 is a View Node Object and representing the room 101 (R101). BA-Object BAO7 points to the BA-Object BAO11 which represents the respective group master "GMa", since in the View-Node-Item-List of BA-Object BAO7 the parameter "GMa" points (arrow A4) to BA-Object BAO11. The BA-Object BAO11 points (arrow A5) to the BA-Object BAO8. The BA-Object BAO8 points (arrow A6) to the BA-Object BAO12. The BA-Object BAO12 comprises the semantic tag T5" "...\BlsCmd(1)", which points (arrow A7) to the dereferenced BA-Object BAO15.

The linked list of arrows A2 to A6 dereferences the BA-Object BAO15. The arrows A2 to A6 are representing relationships between related BA-Objects. Related BA-Objects are working together in a defined context of a building automation system.

By dereferencing the semantic tag T5,T5',T5" (...\BlsCmd (1) the building automation object BAO15 is provided as a representation of a respective actor. The resolution of the linked list of arrows A2 to A6 provides BA-Object BAO12 which corresponds to BA-Object BAO15 in the business logic BL1.

The dashed arrow A8 points directly from the business logic BL1 to BA-Object BAO15.

The illustration depicted in figure 3 shows the dereferencing of one semantic tag to one reference to one BA-Object (BAO15).

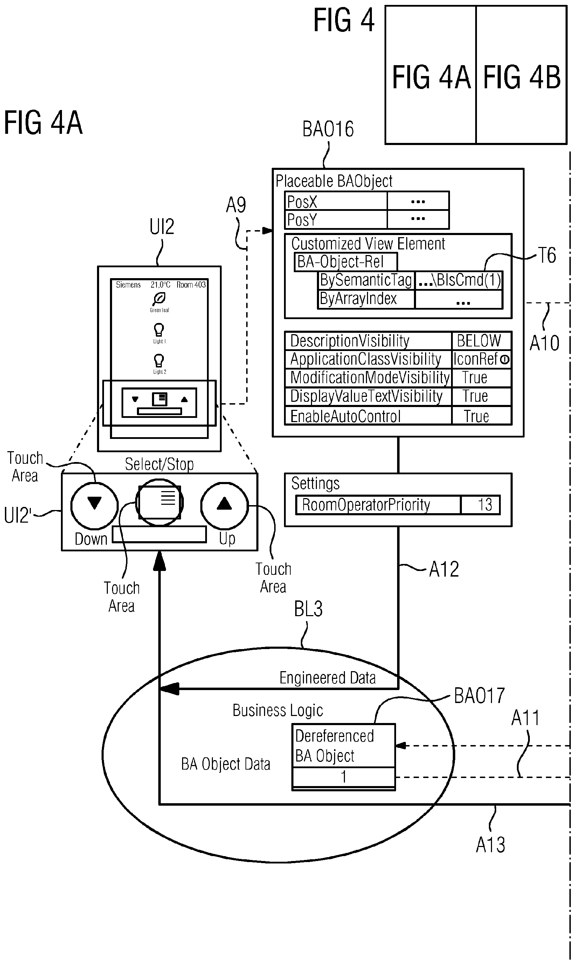

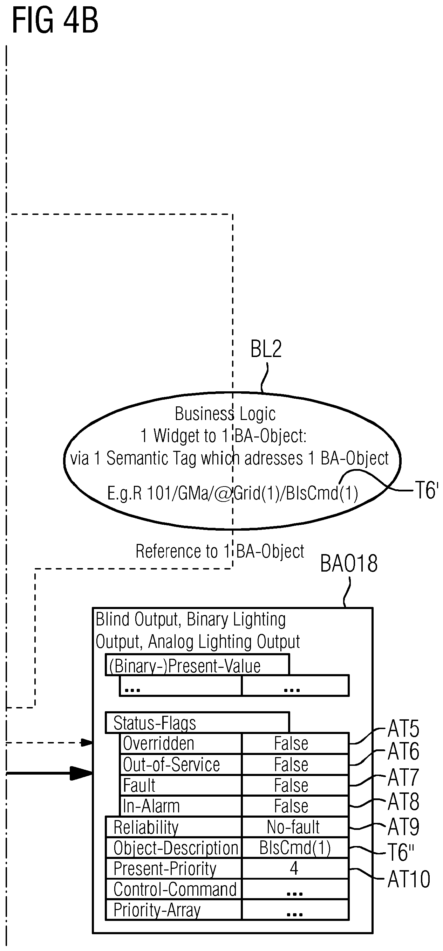

Figure 4 illustrates in a second exemplary scenario the assigning of a widget UI2 for operating and monitoring to one referenced BA-Object. The linked arrow list A9 to A11 assigns the user interface UI2 (e.g. a widget) to the BA-Object BAO18, which is representing a physical object in the field, e.g. in a floor or room of a building. UI2' shows a blow-up of an area of the user interface UI2, adapted to move blind up or down.

The user interface UI2' is linked to the BA-Object BAO18 by dereferencing the semantic tag T6, T6', T6" (...\BlsCmd(1)) which provides pointers between the BA-Objects BAO16 to BAO18 and the corresponding business logics BL2, BL3. The BA-Object BAO16 is a placeable BA-Object and representing the user interface UI2'. The BA-Object BAO16 comprises engineered data to design and create the user interface UI2'. For details regarding the engineered data of a placeable BA-Object see the description in figure 3.

The BA-Object BAO18 is representing a physical object in the field. During run-time the parameter "(Binary-)Present-Value)" of the BA-Object BAO18 shows the current physical state of BA-Object BAO18. The BA-Object BAO18 comprises the exemplary attributes:
- Overridden (AT5), e.g. False;
- Out-of-Service (AT6), e.g. False;
- Fault (AT7), e.g. False;
- In-Alarm (AT8), e.g. False;
- Reliability (AT9), e.g. No-fault;
- Present Priority (AT10), e.g. 4.

Furthermore the BA-Object BAO18 comprises the semantic tag "Object-Description", e.g. "...\BLsCmd(1)". Base on the semantic tag and the expression "R 101/GMa/@Grid(1)/BlsCmd(1)" of the business logic BL2 the BA-object BAO17 is dereferenced, which points to the physical BA-Object BAO18.

The business logic BL2 and BL3 are performed during run-time of the building automation system. The business logic BL2 illustrates in figure 4 the aspect of dereferencing. The business logic BL3 illustrates in figure 4 the aspect of operating the building management system and the respective BA-Objects BAO16 - BAO18 during run-time. Arrow A12 illustrates that the user interface UI2' is designed by the parameters and settings (e.g. RoomOperatorPriority, e.g. 13) of the placeable BA-Object BAO16. The operational impact of instructions generated by the user inputs using interface UI2 to BA-Objects in the field, e.g. BA-Object BAO18 is exemplars illustrated by arrow A13.

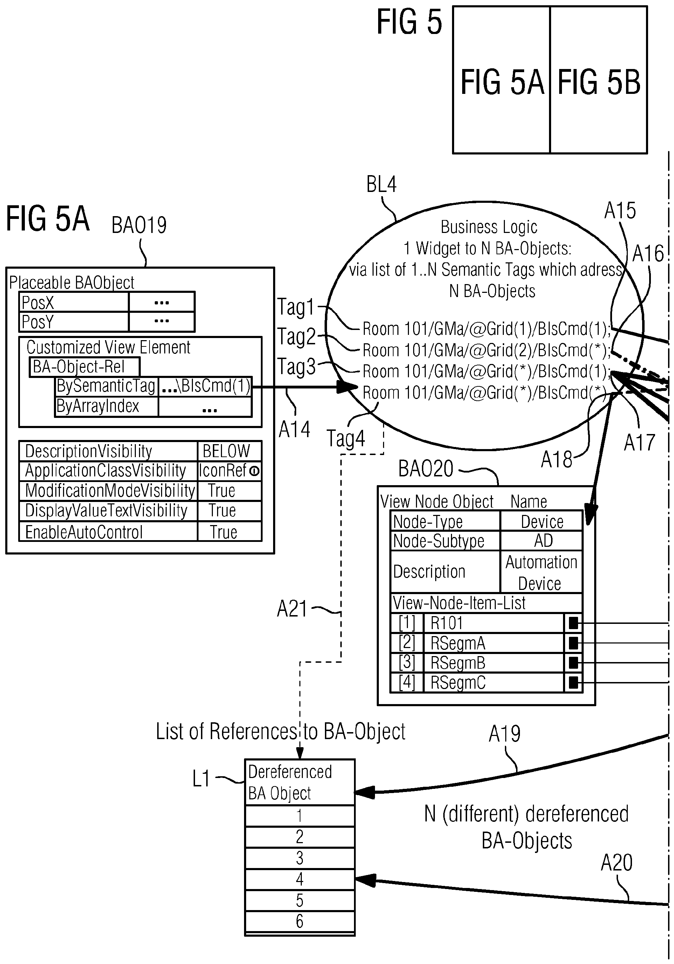

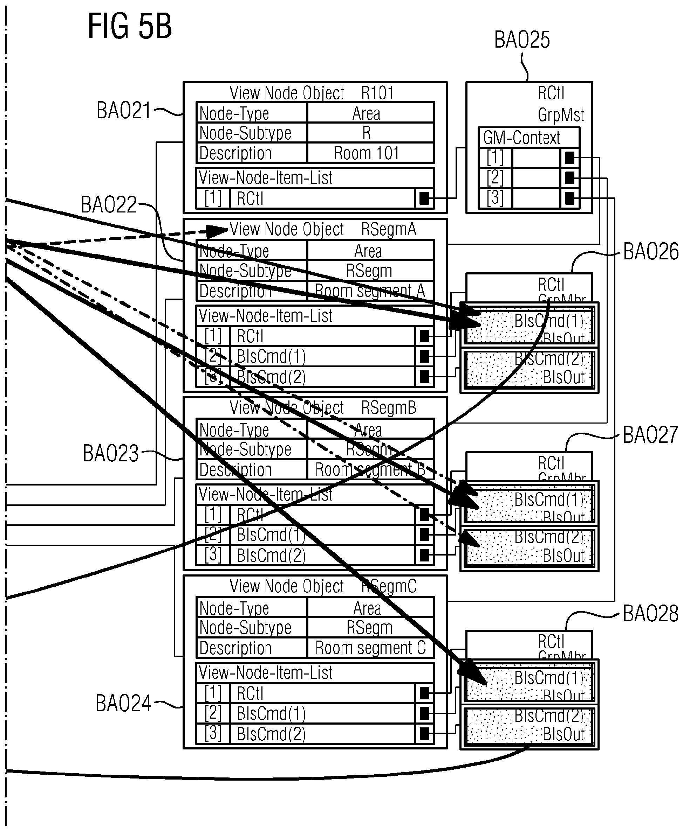

Figure 5 illustrates in a third exemplary scenario the dereferencing of N semantic tags to a list L1 of N references to a BA-Object. In the exemplary illustration according to figure 5 the business logic BL4 assigns one user interface (e.g. a widget to a plurality of BA-Objects. The placeable BA-Object BAO19 which is representing the user interface (e.g. widget to operate the plurality (group) of BA-Objects is resolving or dereferencing the semantic tag "...\BlsCmd(1)" to generate a list L1 of dereferenced BA-Objects.

The arrow A14 points from the semantic tag "...\BlsCmd(1)" in BA-Object BAO19 to the semantic tags Tag1 - Tag4 in the business logic BL4 which are using this semantic tag "...\BlsCmd(1)":
- Tag1: "R 101/GMa/@Grid(1)/BlsCmd(1)";
- Tag2: "R 101/GMa/@Grid(2)/BlsCmd(*)";
- Tag3: "R 101/GMa/@Grid(*)/BlsCmd(1)";
- Tag4: "R 101/GMa/@Grid(*)/BlsCmd(*)".

In the exemplary semantic tag "...\BlsCmd(1)" of the building automation object BAO19 the "..."-Notation means the whole semantic tag.

The semantic tag Tag1 "R 101/GMa/@Grid(1)/BlsCmd(1)" is dereferencing one actor (e.g. a blind) in grid(1), e.g. a floor or a building part. The arrow A15 points to the dereferenced BA-Object BAO26.

The semantic tag Tag2 "R 101/GMa/@Grid(2)/BlsCmd(*)" is dereferencing all actors (e.g. all blinds) in grid(2), e.g. a floor or a building part. The arrows A16 point to the exemplary dereferenced BA-Object BAO27.

The semantic tag Tag3 "R 101/GMa/@Grid(*)/BlsCmd(1)" is dereferencing one actor (e.g. a blind) in every grid. The arrows A17 point to the exemplary dereferenced BA-Objects BAO26, BAO27, and BAO28.

The semantic tag Tag4 "R 101/GMa/@Grid(*)/BlsCmd(*)" is dereferencing all actors (e.g. all blinds) in all grids, means in all parts of the building. The arrows A18 point to a plurality of exemplary dereferenced BA-Objects, for reasons of clarity not shown in figure 5.

The exemplary arrows A19, A20 point from exemplary dereferenced BA-Objects to the list L1 of the group of provided building automation objects (BA-Objects) of the respective actors. The list L1 shows the group of BA-Objects provided by dereferencing the respective semantic tags Tag1 to Tag4.

The dashed arrow A21 points directly from the business logic BL4 to the list L1 of the group members.
- The Business Logic BL4 dereferences N semantic tags Tag1 to Tag4 to a list of N references to a BA-Object. The list L1 of references to a BA-Object has only references to different BA-Objects. This implies that the business logic part which dereferences the N semantic tags to a list L1 of references has to ensure that a BA-Object is not added more than once into this list.
- Advantageously the dereferencing is accomplished by indirect-binding.
- The building-automation-object-relationship "BA-Object-Rel::BySemantic Tag of the CustomizedViewElement" of the according template is applied to the chosen room (e.g. R 101) and a list of references to N BA-Objects is used by one widget to operate and monitor at once all referenced BA-Objects.

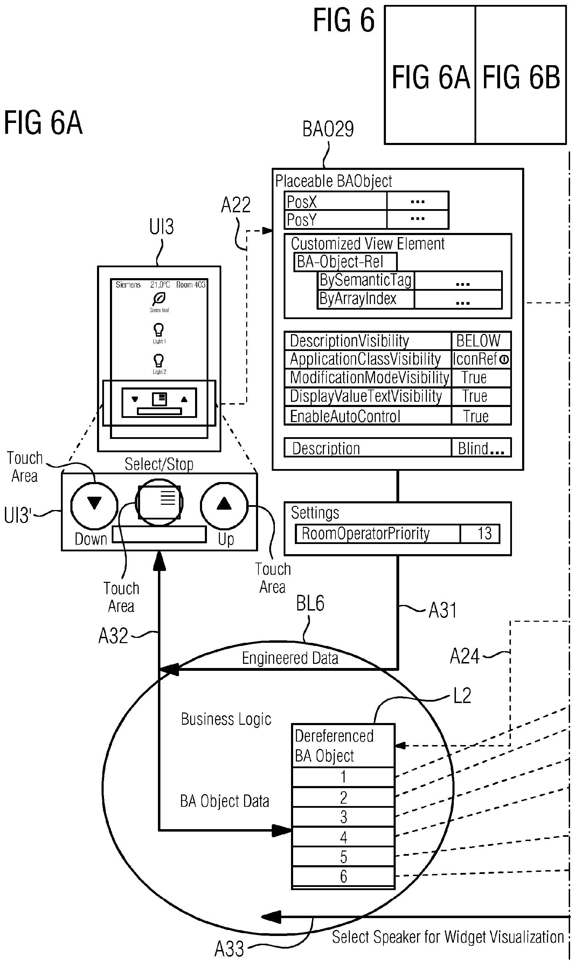

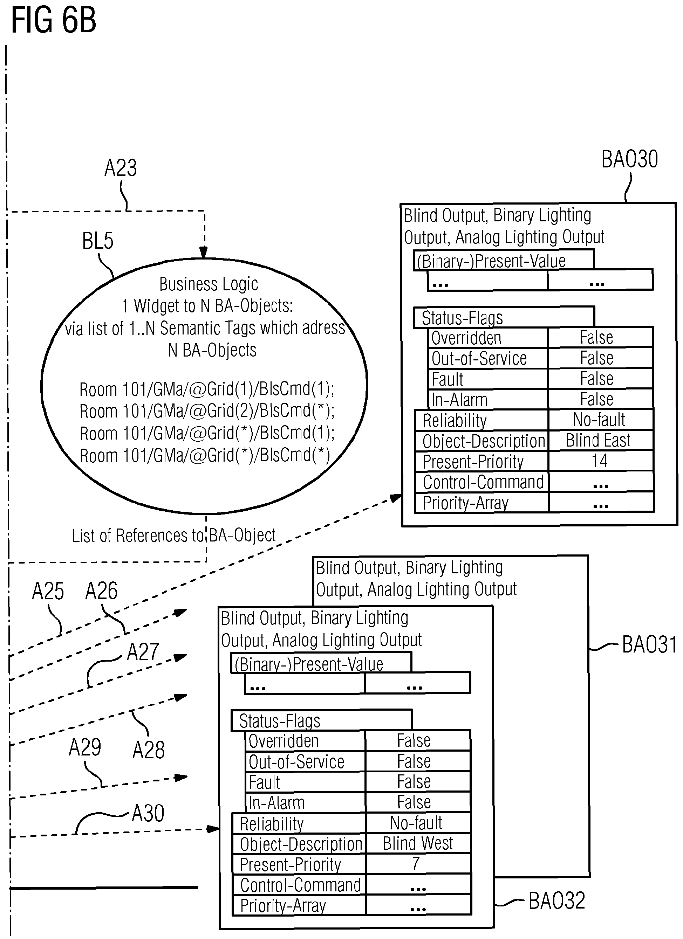

Figure 6 illustrates in a fourth exemplary scenario the assigning of a user interface UI3, UI3' (e.g. a widget) for operating and monitoring to N referenced exemplary BA-Objects BAO30 - BAO32 which are representing physical objects in the field, e.g. in a floor or room of a building. UI3' shows a blow-up of an area of the user interface UI3, adapted to move blinds up or down.

The BA-Object BAO29 is a placeable BA-Object and representing the user interface UI3'. The BA-Object BAO29 comprises engineered data to design and create the user interface UI3'. For details regarding the engineered data of a placeable BA-Object see the description in figure 3.

The BA-Objects BAO30 - BAO32 are representing physical objects in the field (e.g. blinds or lights). During run-time the parameter "(Binary-)Present-Value)" of the BA-Objects BAO30 - BAO32 shows the current physical state of the respective BA-Object. The BA-Objects BAO30 - BAO32 comprise in each case the exemplary attributes:
- Overridden, e.g. False;
- Out-of-Service, e.g. False;
- Fault, e.g. False;
- In-Alarm, e.g. False;
- Reliability, e.g. No-fault;
- Object-Description, e.g. Blind East or Blind West.
- Present Priority, e.g. 7 or 14.

The business logic BL5 and BL6 are performed during run-time of the building automation system. The business logic BL5 illustrates in figure 6 the aspect of dereferencing (arrows A23, A24). The business logic BL6 illustrates in figure 6 the aspect of operating the building management system and the respective BA-Objects BAO30 - BAO32 during run-time (arrows A31, A32). Arrow A31 illustrates that the user interface UI3' is designed by the parameters and settings (e.g. RoomOperatorPriority, e.g. 13) of the placeable BA-Object BAO29. The operational impact of instructions generated by the user inputs using interface UI3 to BA-Objects BAO30 to BAO32 or more BA-Objects in the field is exemplary illustrated by arrows A25 to A30.

The list L2 comprises the set of dereferenced BA-Objects, which belong to a group.

Arrow A33 indicated that the Speaker Algorithm selects a group master object from the group of BA-Objects listed in list L2. The selected group master object is taken for visualization and representation the group of BA-Objects. The Presentation Layer Logic must not be changed as still a single BA-Object defines the behavior of the user interface UI3' (e.g. a widget).

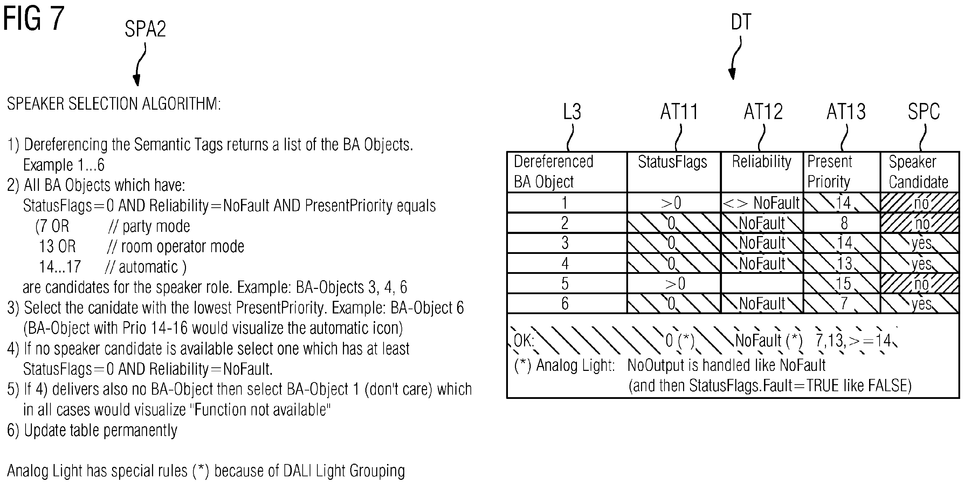

Figure 7 shows an example for applying the speaker algorithm to select an adequate group master object from a group of dereferenced BA-Objects. On the left hand side figure 7 shows method steps 1) - 6) to perform the exemplary speaker selection algorithm SPA2 to select a group master object (speaker) out of the list L3 of dereferenced BA-Objects 1 to 6. On the right hand side figure 7 shows an exemplary decision table DT to visually illustrate how to determine a speaker or group master object based on the attributes StatusFlags (AT11), Reliability (AT12), and Present Priority (AT13).

### Regarding speaker selection algorithm SPA2:

- **To Step 1:** the Business logic must manage a table with the references to the (different) BA-Objects and their for the speaker selection relevant property values. A RUT is visualizing a BA-Object under certain conditions. The relevant properties that something is shown and commandable are: *StatusFlags, Reliability* and *PresentPrior*ity.
- **To Step 2:** *StatusFlags, Reliability* and *PresentPriority* influence the condition whether a BA-Object is a candidate for the speaker role:
   o *StatusFlags* must have a value of "0" that the widget is able to command something. If one of the flags of the *StatusFlags* is set gets the error handling active and the widget is grayed out.
   o *Reliability* must have a value of "NoFault" that the widget is able to command something. If *StatusFlags* has a value of <> "NoFault" gets the error handling active and the widget is grayed out (see decision DT) .
   ∘ **Exception for Analoguous Lights:** *Reliability* with a value "NoOutput" is treated like "NoFault". Equally is in this case the implied *StatusFlags.Fault=TRUE* treaded like a *StatusFlags.Fault=False.* The reason is the DALI Light grouping implementation which sets *Reliability* to the value "NoOutput" and *StatusFlags.Fault=TRUE* if one of the grouped lights is broken. In this case it should be possible to command over the BA-Object the other working Lights.
   ∘ *PresentPriority* must have a value of 7, RoomOperatorPriority (configurable, Default is 13) or >= 14 (automatic mode). Only if the *PresentPriority* has a value in this range a RUT is able to command something otherwise gets the error handling active and the widget is grayed out.
   ∘ If the conditions for all three property values are fulfilled is the BA-Object a candidate for the speaker role.
- To Step 3: If more than one candidate exists is the one with the lowest PresentPriority value (Highest priority which RUT (room unit touch or mobile communication device) can command/visualize) chosen. A BA-Object with a PresentPriority value of 7 or 13 is commanded by a room unit while a BA-Object with a PresentPriority value of >= 14 is in automatic mode and would show an automatic mode icon. As long as one BA-Object is commanded by a room unit no automatic mode icon should appear therefore always choose one of the one BA-Objects with the lowest PresentPriority value and the speaker represents the most logical state of all referenced BA-Objects.
- **To Step 4:** If no candidate exists there choose a BA-Object which at least works correctly. This is one with *StatusFlag* with a value of "0" and *Reliability* with a value of "NoFault". Also choose one of the one's with the lowest *PresentPriority* value the widget is grayed out. But the chance that it gets commandable is higher than with BA-Objects which are broken.
- **To Step 5:** If step 4 also delivers no candidate the first BA-Object in the list can be chosen. In this case all BA-Objects would be visualized as "Function not available".
- **To Step 6:** The table has to be up-to-date and permanently actualized. There exists a performance optimization which has to be implemented:
   ∘ As long as the speaker has a *PresentPriority* of 7 or 13 it represents the most logical state of all referenced BA-Objects and the table must not be updated.
   ∘ If the speaker has a *PresentPriority* of >= 14 (automatic mode) it must update the table to immediately detect if a BA-Object with *PresentPriority* of 7 or 13 becomes a new speaker! In such case should the speaker immediately be changed so that the automatic mode icon disappears!
- **Error Handling:** if the list is empty and no BA-Object was dereferenced a defined error handling gets active.

In the example illustrated in figure 7 from the list L2 of dereferenced BA-Objects 1 to 6, as speaker candidates SPC the BA-Objects 3, 4, and 6 are chosen, based on analyzing the attributes AT11 - AT13. In this example BA-Object 6 is selected as group master object (speaker of the group), since the BA-Object 6 has the lowest PresentPriority.

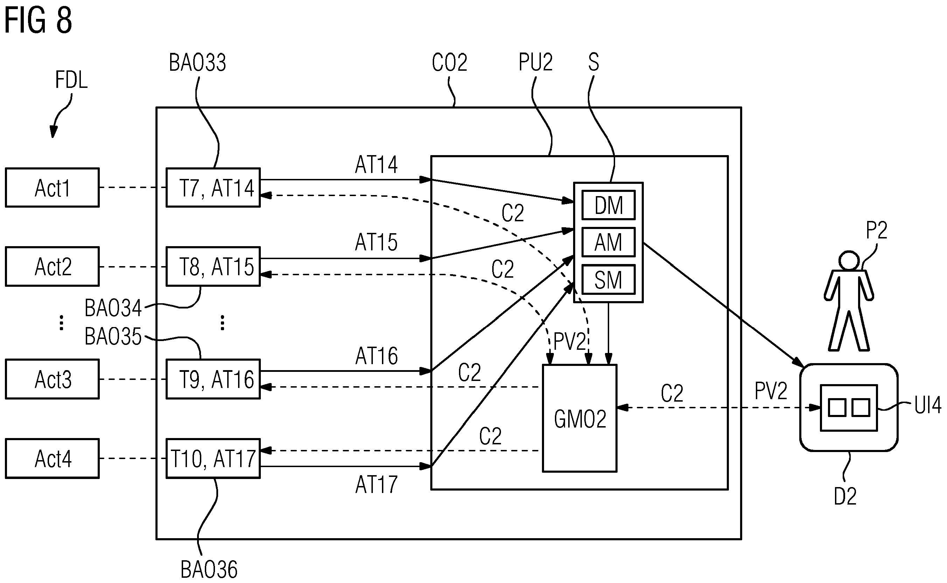

Figure 8 shows an exemplary computerized system S for providing an operating and monitoring mechanism for a group of actors Act1 - Act4 in a building automation system. The computerized system S provides an operating and monitoring mechanism for a group of actors Act1 - Act4 in a building automation system, wherein an actor Act1 - Act4 is represented by a building automation object BAO33 - BAO36, wherein a building automation object BAO33 - BAO36 comprises semantic tags T7 - T10, characterizing an actor Act1 - Act4 (e.g. blind, light) in each case. The system S comprises a dereferencing module DM configured to provide the building automation objects BAO33 - BAO36 of the respective actors Act1 - Act4 of the group by dereferencing the respective semantic tags T7 - T10 of the building automation objects BAO33 - BAO36; a selection module SM configured to select a group master object GMO2 from the provided building automation objects BAO33 - BAO36 by analyzing attributes AT14 - AT17 of the building automation objects BAO33 - BAO36; and an assigning module AM configured to assign a user interface UI4 (e.g. a widget) to the selected group master object GMO2 which is adapted to operate and monitor the selected group master object GMO2. The user interface UI4 (e.g. a widget) can be provided on a touchsensitive display D2 of a room control unit or of a suitable smart phone.

Attributes AT14 to AT17 are for instance status flags (defined BACnet bit-set; e.g. fault), reliability (set of faults; e.g. number of faults, no fault, sensor broken, etc), or present priority (array of priorities (1 to 16); e.g. "1" for highest priority (e.g. a hurricane is approaching), "8" for user action, "16" for lowest priority. Advantageously the attributes AT14 to AT17 are also BACnet properties.

The system S can be implemented as a software program running on a processing unit PU2 of a computer (e.g. Personal Computer, Workstation, and Server). The computer comprises input means (e.g. keyboard, mouse), output means (e.g. display), and memory. The system S is assigning a user interface UI4 (e.g. a widget) to the selected group master object GMO2. The user interface UI4 is provided on the display D2 of a room control unit (which is assigned to a room, a floor, or a part of a building), a panel (e.g. field panel), or on a mobile communication device (e.g. smart phone) of a user P2. Advantageously the user interface UI4 is provided as a widget. The user interface UI4 is adapted to operate and monitor the selected group master object GMO2 by respective commands C2 (e.g. open blinds or close blinds). The user interface UI4 can also be provided on the displays of different devices at the same time.

A user P2 inputs a command C2 (e.g. "close blinds") via the user interface UI4 to operate a group of actors Act1 - Act4 (e.g. blinds or lights), which are represented by building automation objects BAO33 - BAO36. The group master object GMO2 receives the command C2 and forwards the command C2 (e.g. "close blinds") to all building automation objects BAO33 - BAO36 of the respective group. When receiving the command C2 (e.g. "close blinds") the building automation objects BAO33 - BAO36 trigger the actors Act1 - Act4 to execute the command C2.

In the arrangement shown in Figure 8, the processing unit PU2 can be part of or realized in a computer, a general-purpose data processing system, or a BAS controller CO2 such as a PXC programmable controller commercially available from Siemens Industry, Inc. or Siemens Schweiz AG (collectively "Siemens") .

Advantageously the system S is integrated in a building automation system or part of a building automation system.

Advantageously the dereferencing module DM, the selection module SM, and the assigning module AM are executed by the run-time system of a building automation system. During runtime a group master object GMO2 can be selected.

Advantageously the selection module SM performs the selection based on analyzing the attributes status flags, reliability and present priority of the respective building automation objects BAO33 - BAO36.

Advantageously the selection module SM performs the selection based on analyzing "pure BACnet properties". In this case the attributes AT14 - AT17 are BACnet properties. BACnet is a Building Automation and Control (BAC) network and defining the ISO 16484-5 standard protocol.

Advantageously the selection module SM performs the selection based on analyzing the physical status and the applicative status of the respective actors Act1 - Act4.

The system S is furthermore providing an operating and monitoring mechanism for a group of actors Act1 - Act4 in a building automation system, wherein an actor Act1 - Act4 is represented by a building automation object BAO33 - BAO36, wherein a building automation object BAO33 - BAO36 comprises semantic tags T7 - T10, characterizing an actor Act1 - Act4 in each case, wherein the building automation objects BAO33 - BAO36 of the respective actors Act1 - Act4 of the group are provided by dereferencing the respective semantic tags T7 - T10; wherein a group master object GMO2 is selected out of the provided building automation objects BAO33 - BAO36 by analyzing attributes AT14 to AT17 of the building automation objects BAO33 - BAO36; and wherein a user interface UI4 (e.g. a widget) is assigned to the selected group master object GMO2, wherein the user interface UI4 is adapted to operate and monitor the selected group master object GMO2. If a selected group master object GMO2 is defect, the operating and monitoring mechanism selects at run-time a new group master object GMO2.

In the exemplary arrangement shown in Figure 8 the building automation object BAO34 (building automation object BAO34 is representing actor Act2) is selected as group master object GMO2 from the group of building automation objects BAO33 to BAO36 by applying the speaker algorithm (implemented in the selection module SM). When the user P2 sends a command C2 to the group master object GMO2 this command C2 will be applied to all building automation objects BAO33 - BAO36 of the group.

The group master object GMO2 is representing the group also regarding visualizing the status and/or present value PV2 of the group. The status and the present value PV2 of the group master object GMO2 is showing the status and the present value of the whole group. The current present value PV2 of the building automation object BAO34 will be provided on the user interface UI4 to represent the present value of the whole group of building automation objects BAO33 to BAO36.

If the building automation object BAO34 is defect and can no longer act as group master object, the selection module SM is selecting automatically another building automation object from the group to act as group master object.

The processing unit PU2 realizing the system S can be for instance a personal computer (PC) or a workstation. The processing unit PU2 is equipped and configured with appropriate hardware and software components. The processing unit PU2 can also be implemented in a cloud computing environment. Advantageously the controller CO2 comprises a memory or a database operatively connected to the processing unit PU2. The database could also be stored in an in an In-Memory-Database of the processing unit PU2. Storing the database an In-Memory-Database of the processing unit PU2 is especially advantageous for applications which require very high response times for providing faults to the user.

### Reference Signs

- BAO1 - BAO32: Building Automation Object
- GMO1, GMO2: Group Master Object
- AT1 - AT17: Attribute
- T1 - T10,T5'- T6`,T5" - T6": Tag
- Tag1 - Tag4: Tag
- PU1, PU2: Processing Unit
- SPA1, SPA2: Speaker Algorithm
- D1, D2: Display
- UI1 - UI4,UI2',UI3': User Interface
- CO1, CO2: Controller
- C1, C2: Command
- ST1 - ST3; 1) - 6): Step
- P1, P2: User
- A1 - A33: Arrow
- BL1 - BL6: Business Logic
- L1 - L3: List
- DT: Decision Table
- SPC: Speaker Candidate
- S: System
- DM: Dereferencing Module
- SM: Selection Module
- AM: Assigning Module
- Act1 - Act4: Actor
- FDL: Field Device Level
- RUT: Room Unit Touch
- PV1, PV2: Present Value

## Claims

1. A method for providing an operating and monitoring mechanism for a group of actors (Act1 - Act4) in a building automation system, wherein each of the actors (Act1 - Act4) is represented by a building automation object (BAO1 - BAO32), wherein each of the building automation objects (BAO1 - BAO32) is a data object comprising semantic tags (T1 - T10, T5'- T6', T5" - T6", Tag1 - Tag4), characterizing each a respective actor, the method comprising:
providing the building automation objects (BAO1 - BAO32) of the respective actors (Act1 - Act4) of the group by dereferencing the respective semantic tags (T1 - T10,T5'- T6`,T5" - T6", Tag1 - Tag4);
selecting a group master object (GMO1, GMO2) from the provided building automation objects (BAO1 - BAO32) by analyzing attributes (AT1 - AT17) of the building automation objects (BAO1 - BAO32);
assigning a user interface (UI1 - UI4,UI2',UI3') to the selected group master object (GMO1, GMO2) adapted to operate and monitor the selected group master object (GMO1, GMO2), wherein the user interface (UI1-UI4, UI2', UI3') is provided on a display (D1, D2);
**characterized in that**
performing the selection of the group master object (GMO1, GMO2) is dynamically and permanently executed during runtime based on the analyzed attributes (AT1 - AT17) of the building automation objects (BAO1 - BAO32), and wherein the selection is based on analyzing a physical status and an applicative status of the respective actors (Act1 - Act4),
wherein the selected group master object (GMO1, GMO2) is acting as a speaker of the group, and
wherein the group master object (GMO1, GMO2) is representing the group also regarding visualizing a status and/or a present value (PV1, PV2) of the group.

2. The method of claim 1, wherein the selection is based on analyzing the attributes: status flags, reliability and present priority.

3. The method according to one of the preceding claims, wherein the selection is based on analyzing standard BacNet properties.

4. The method according to one of the preceding claims, wherein the user interface is realized by a widget.

5. A computer program product loadable into the memory of a digital computer comprising software code portions for performing a method according to one of the claims 1 to 4 when said product is run on a computer.

6. A computer-readable medium containing a set of instructions that causes a computer to perform a method according to one of the claims 1 to 4.

7. A computerized system for providing an operating and monitoring mechanism for a group of actors (Act1 - Act4) in a building automation system, wherein each of the actors is represented by a building automation object (BAO1 - BAO32), wherein each of the building automation objects (BAO1 - BAO32) is a data object comprising semantic tags (T1 - T10, T5'- T6', T5" - T6", - Tag4), characterizing each a respective actor (Act1 - Act4), the system comprising:
a dereferencing module configured to provide the building automation objects (BAO1 - BAO32) of the respective actors of the group by dereferencing the respective semantic tags (T1 - T10,T5'- T6',T5" - T6",Tag1 - Tag4) of the building automation objects (BAO1 - BAO32);
a selection module (SM) configured to select a group master object (GMO1, GMO2) from the provided building automation objects (BAO1 - BAO32) by analyzing attributes (AT1 - AT17) of the building automation objects (BAO1 - BAO32);
an assigning module (AM) configured to assign a user interface (UI1 - UI4,UI2',UI3') to the selected group master object (GMO1, GMO2) which is adapted to operate and monitor the selected group master object (GMO1, GMO2), wherein the user interface (UI1-UI4, UI2', UI3') is provided on a display (D1, D2); wherein the group master object (GMO1, GMO2) is permanently determined during runtime based on the analyzed attributes (AT1 - AT17) of the building automation objects (BAO1 - BAO32);
**characterized in that**
the selection module (SM) is further configured so that performing the selection of the group master object (GMO1, GMO2) is dynamically and permanently executed during runtime based on the analyzed attributes (AT1 - AT17) of the building automation objects (BAO1 - BAO32), and wherein the selection is based on analyzing a physical status and an applicative status of the respective actors (Act1 - Act4),
wherein the selected group master object (GMO1, GMO2) is acting as a speaker of the group, and
wherein the group master object (GMO1, GMO2) is representing the group also regarding visualizing a status and/or a present value (PV1, PV2) of the group.

8. The system according to claim 7, wherein the system is a building automation system.

9. The system according to one of the preceding claims 7 to 8, wherein the dereferencing module, the selection module (SM), and the assigning module (AM) are executed by the runtime system of a building automation system.

10. The system according to one of the preceding claims 7 to 9, wherein the selection module (SM) is configured to perform the selection based on analyzing the attributes status flags, reliability and present priority of the respective building automation objects (BAO1 - BAO32) .

11. The system according to one of the preceding claims 7 to 10, wherein the selection module (SM) is configured to perform the selection based on analyzing pure BacNet properties.

12. The system according to one of the preceding claims 7 to 11, wherein the selection module (SM) is configured to perform the selection based on analyzing the physical status and the applicative status of the respective actors (Act1 - Act4) .

## Patentansprüche

1. Verfahren zum Bereitstellen eines Betriebs- und Überwachungsmechanismus für eine Gruppe von Aktoren (Act1 - Act4) in einem Gebäudeautomationssystem, wobei jeder der Aktoren (Act1 - Act4) von einem Gebäudeautomationsobjekt (BAO1 - BAO32) repräsentiert wird, wobei es sich bei jedem der Gebäudeautomationsobjekte (BAO1 - BAO32) um ein Datenobjekt mit semantischen Tags (T1 - T10, T5' - T6', T5" - T6", Tag1 - Tag4) handelt, die jeweils einen entsprechenden Aktor kennzeichnen, wobei das Verfahren Folgendes umfasst:
Bereitstellen der Gebäudeautomationsobjekte (BAO1 - BAO32) der jeweiligen Aktoren (Act1 - Act4) der Gruppe durch Dereferenzieren der jeweiligen semantischen Tags (T1 - T10, T5' - T6', T5" - T6", Tag1 - Tag4),
Auswählen eines Gruppen-Master-Objekts (GMO1, GMO2) aus den bereitgestellten Gebäudeautomationsobjekten (BAO1 - BAO32) durch Analysieren von Attributen (AT1 - AT17) der Gebäudeautomationsobjekte (BAO1 - BAO32),
Zuweisen einer Benutzerschnittstelle (UI1 - UI4, UI2', UI3') zu dem ausgewählten Gruppen-Master-Objekt (GMO1, GMO2), die so ausgelegt ist, dass sie das ausgewählte Gruppen-Master-Objekt (GMO1, GMO2) betreibt und überwacht, wobei die Benutzerschnittstelle (UI1 - UI4, UI2', UI3') auf einer Anzeige (D1, D2) bereitgestellt wird,
**dadurch gekennzeichnet, dass**
das Auswählen des Gruppen-Master-Objekts (GMO1, GMO2) während der Laufzeit dynamisch und dauerhaft auf der Grundlage der analysierten Attribute (AT1 - AT17) der Gebäudeautomationsobjekte (BAO1 - BAO32) durchgeführt wird und wobei die Auswahl auf der Grundlage des Analysierens eines physischen und eines anwendungsbezogenen Status der jeweiligen Aktoren (Act1 - Act4) erfolgt,
wobei das ausgewählte Gruppen-Master-Objekt (GMO1, GMO2) als Sprecher für die Gruppe dient und
wobei das Gruppen-Master-Objekt (GMO1, GMO2) die Gruppe auch hinsichtlich des Visualisierens eines Status und/oder eines aktuellen Werts (PV1, PV2) der Gruppe repräsentiert.

2. Verfahren nach Anspruch 1, wobei die Auswahl auf der Grundlage des Analysierens der Attribute Status-Flags, Zuverlässigkeit und aktuelle Priorität erfolgt.

3. Verfahren nach einem der vorhergehenden Ansprüche, wobei die Auswahl auf der Grundlage des Analysierens standardmäßiger BACnet-Eigenschaften erfolgt.

4. Verfahren nach einem der vorhergehenden Ansprüche, wobei die Benutzerschnittstelle durch ein Widget umgesetzt wird.

5. Computerprogrammprodukt, das sich in den Speicher eines digitalen Computers laden lässt, mit Softwarecodeteilen zum Durchführen eines Verfahrens nach einem der Ansprüche 1 bis 4, wenn das Produkt auf einem Computer ausgeführt wird.

6. Computerlesbares Medium, das einen Satz Anweisungen enthält, der einen Computer dazu veranlasst, ein Verfahren nach einem der Ansprüche 1 bis 4 durchzuführen.

7. Computersystem zum Bereitstellen eines Betriebs- und Überwachungsmechanismus für eine Gruppe von Aktoren (Act1 - Act4) in einem Gebäudeautomationssystem, wobei jeder der Aktoren von einem Gebäudeautomationsobjekt (BAO1 - BAO32) repräsentiert wird, wobei es sich bei jedem der Gebäudeautomationsobjekte (BAO1 - BAO32) um ein Datenobjekt mit semantischen Tags (T1 - T10, T5' - T6', T5" - T6", Tag1 - Tag4) handelt, die jeweils einen entsprechenden Aktor (Act1 - Act4) kennzeichnen, wobei das System Folgendes umfasst:
ein Dereferenzierungsmodul, das so konfiguriert ist, dass es die Gebäudeautomationsobjekte (BAO1 - BAO32) der jeweiligen Aktoren der Gruppe durch Dereferenzieren der jeweiligen semantischen Tags (T1 - T10, T5' - T6', T5" - T6", Tag1 - Tag4) der Gebäudeautomationsobjekte (BAO1 - BAO32) bereitstellt,
ein Auswahlmodul (SM), das so konfiguriert ist, dass es aus den bereitgestellten Gebäudeautomationsobjekten (BAO1 - BAO32) durch Analysieren von Attributen (AT1 - AT17) der Gebäudeautomationsobjekte (BAO1 - BAO32) ein Gruppen-Master-Objekt (GMO1, GMO2) auswählt,
ein Zuweisungsmodul (AM), das so konfiguriert ist, dass es dem ausgewählten Gruppen-Master-Objekt (GMO1, GMO2) eine Benutzerschnittstelle (UI1 - UI4, UI2', UI3') zuweist, die so ausgelegt ist, dass sie das ausgewählte Gruppen-Master-Objekt (GMO1, GMO2) betreibt und überwacht, wobei die Benutzerschnittstelle (UI1 - UI4, UI2', UI3') auf einer Anzeige (D1, D2) bereitgestellt ist, wobei das Gruppen-Master-Objekt (GMO1, GMO2) während der Laufzeit auf der Grundlage der analysierten Attribute (AT1 - AT17) der Gebäudeautomationsobjekte (BAO1 - BAO32) dauerhaft bestimmt wird,
**dadurch gekennzeichnet, dass**
das Auswahlmodul (SM) ferner so konfiguriert ist, dass es das Auswählen des Gruppen-Master-Objekts (GMO1, GMO2) während der Laufzeit dynamisch und dauerhaft auf der Grundlage der analysierten Attribute (AT1 - AT17) der Gebäudeautomationsobjekte (BAO1 - BAO32) durchführt, und wobei die Auswahl auf der Grundlage des Analysierens eines physischen und eines anwendungsbezogenen Status der jeweiligen Aktoren (Act1 - Act4) erfolgt,
wobei das ausgewählte Gruppen-Master-Objekt (GMO1, GMO2) als Sprecher für die Gruppe dient und
wobei das Gruppen-Master-Objekt (GMO1, GMO2) die Gruppe auch hinsichtlich des Visualisierens eines Status und/oder eines aktuellen Werts (PV1, PV2) der Gruppe repräsentiert.

8. System nach Anspruch 7, wobei es sich bei dem System um ein Gebäudeautomationssystem handelt.

9. System nach einem der vorhergehenden Ansprüche 7 bis 8, wobei das Dereferenzierungsmodul, das Auswahlmodul (SM) und das Zuweisungsmodul (AM) von dem Laufzeitsystem eines Gebäudeautomationssystems ausgeführt werden.

10. System nach einem der vorhergehenden Ansprüche 7 bis 9, wobei das Auswahlmodul (SM) so konfiguriert ist, dass es das Auswählen auf der Grundlage des Analysierens der Attribute Status-Flags, Zuverlässigkeit und aktuelle Priorität der jeweiligen Gebäudeautomationsobjekte (BAO1 - BAO32) durchführt.

11. System nach einem der vorhergehenden Ansprüche 7 bis 10, wobei das Auswahlmodul (SM) so konfiguriert ist, dass es das Auswählen auf der Grundlage des Analysierens reiner BACnet-Eigenschaften durchführt.

12. System nach einem der vorhergehenden Ansprüche 7 bis 11, wobei das Auswahlmodul (SM) so konfiguriert ist, dass es das Auswählen auf der Grundlage des Analysierens des physischen und des anwendungsbezogenen Status der jeweiligen Aktoren (Act1 - Act4) durchführt.

## Revendications

1. Procédé de fourniture d'un mécanisme de surveillance et d'actionnement pour un groupe d'actuateurs (Act1 - Act4) dans un système d'automatisation de bâtiment, dans lequel chacun des actuateurs (Act1 - Act4) est représenté par un objet d'automatisation de bâtiment (BAO1 - BAO32), dans lequel chacun des objets d'automatisation de bâtiment (BAO1 - BAO32) est un objet de données comprenant des étiquettes sémantiques (T1 - T10, T5' - T6', T5" - T6", - Tag4), caractérisant chacune un actuateur respectif, le procédé comprenant :
la fourniture des objets d'automatisation de bâtiment (BAO1 - BAO32) des actuateurs respectifs (Act1 - Act4) du groupe par le déréférencement des étiquettes sémantiques respectives (T1 - T10, T5' - T6', T5" - T6", - Tag4),
la sélection d'un objet maître de groupe (GMO1, GMO2) à partir des objets d'automatisation de bâtiment fournis (BAO1 - BAO32) par l'analyse d'attributs (AT1 - AT17) des objets d'automatisation de bâtiment (BAO1 - BAO32),
l'affectation d'une interface utilisateur (UI1 - UI4, UI2', UI3') à l'objet maître de groupe sélectionné (GMO1, GMO2) adaptée de façon à actionner et surveiller l'objet maître de groupe sélectionné (GMO1, GMO2) , l'interface utilisateur (UI1 - UI4, UI2', UI3') étant fournie sur un dispositif d'affichage (D1, D2),
**caractérisé en ce que**
l'exécution de la sélection du groupe objet maître (GMO1, GMO2) est exécutée dynamiquement et de manière permanente pendant le temps d'exécution en fonction des attributs analysés (AT1 - AT17) des objets d'automatisation de bâtiment (BAO1 - BAO32), et dans lequel la sélection est basée sur l'analyse d'un état physique et d'un état applicatif des actuateurs respectifs (Act1 - Act4),
dans lequel l'objet maître de groupe sélectionné (GMO1, GMO2) agit en tant que locuteur du groupe, et
dans lequel le groupe objet maître (GMO1, GMO2) représente le groupe concernant également la visualisation d'un état et/ou d'une valeur actuelle (PV1, PV2) du groupe.

2. Procédé selon la revendication 1, dans lequel la sélection est basée sur l'analyse des attributs : balises d'état, fiabilité et priorité actuelle.

3. Procédé selon l'une des revendications précédentes, dans lequel la sélection est basée sur l'analyse de propriétés BacNet standard.

4. Procédé selon l'une des revendications précédentes, dans lequel l'interface utilisateur est réalisée par un gadget logiciel.

5. Produit de programme informatique pouvant être chargé dans la mémoire d'un ordinateur numérique comprenant des parties de code logiciel destinées à l'exécution d'un procédé selon l'une des revendications 1 à 4 lorsque ledit produit est exécuté sur un ordinateur.

6. Support lisible par ordinateur contenant un ensemble d'instructions qui amènent un ordinateur à exécuter un procédé selon l'une des revendications 1 à 4.

7. Système informatisé de fourniture d'un mécanisme de surveillance et d'actionnement destiné à un groupe d'actuateurs (Act1 - Act4) dans un système d'automatisation de bâtiment, dans lequel chacun des actuateurs est représenté par un objet d'automatisation de bâtiment (BAO1 - BAO32), dans lequel chacun des objets d'automatisation de bâtiment (BAO1 - BAO32) est un objet de données comprenant des étiquettes sémantiques (T1 - T10, T5' - T6', T5" - T6", - Tag4), caractérisant chacune un actuateur respectif (Act1 - Act4), le système comprenant :
un module de déréférencement configuré de façon à fournir les objets d'automatisation de bâtiment (BAO1 - BAO32) des actuateurs respectifs du groupe par le déréférencement des étiquettes sémantiques respectives (T1 - T10, T5' - T6', T5" - T6", - Tag4) des objets d'automatisation de bâtiment (BAO1 - BAO32),
un module de sélection (SM) configuré de façon à sélectionner un objet maître de groupe (GMO1, GMO2) à partir des objets d'automatisation de bâtiment fournis (BAO1 - BAO32) par l'analyse d'attributs (AT1 - AT17) des objets d'automatisation de bâtiment (BAO1 - BAO32 ),
l'affectation d'un module (AM) configuré de façon à affecter une interface utilisateur (UI1 - UI4, UI2', UI3') à l'objet maître de groupe sélectionné (GMO1, GMO2) qui est adaptée de façon à actionner et surveiller l'objet maître de groupe sélectionné (GMO1, GMO2), l'interface utilisateur (UI1-UI4, UI2', UI3') étant fournie sur un dispositif d'affichage (D1, D2), le groupe objet maître (GMO1, GMO2) étant déterminé de manière permanente pendant le temps d'exécution en fonction des attributs analysés (AT1 - AT17) des objets d'automatisation de bâtiment (BAO1 - BAO32),
**caractérisé en ce que**
le module de sélection (SM) est configuré en outre de sorte que l'exécution de la sélection du groupe objet maître (GMO1, GMO2) soit exécutée dynamiquement et de manière permanente pendant le temps d'exécution en fonction des attributs analysés (AT1 - AT17) des objets d'automatisation de bâtiment (BAO1 - BAO32), et dans lequel la sélection est basée sur l'analyse d'un état physique et d'un état applicatif des actuateurs respectifs (Act1 - Act4),
dans lequel l'objet maître de groupe sélectionné (GMO1, GMO2) agit en tant que locuteur du groupe, et
dans lequel le groupe objet maître (GMO1, GMO2) représente le groupe concernant également la visualisation d'un état et/ou d'une valeur actuelle (PV1, PV2) du groupe.

8. Système selon la revendication 7, dans lequel le système est un système d'automatisation de bâtiment.

9. Système selon l'une des revendications précédentes 7 à 8, dans lequel le module de déréférencement, le module de sélection (SM) et le module d'affectation (AM) sont exécutés par le système d'exécution d'un système d'automatisation de bâtiment.

10. Système selon l'une des revendications précédentes 7 à 9, dans lequel le module de sélection (SM) est configuré de façon à exécuter la sélection en fonction de l'analyse des attributs balises d'état, fiabilité et priorité actuelle des objets d'automatisation de bâtiment respectifs (BAO1 - BAO32).

11. Système selon l'une des revendications précédentes 7 à 10, dans lequel le module de sélection (SM) est configuré de façon à exécuter la sélection en fonction de l'analyse de propriétés BacNet pures.

12. Système selon l'une des revendications précédentes 7 à 11, dans lequel le module de sélection (SM) est configuré de façon à exécuter la sélection en fonction de l'analyse de l'état physique et de l'état applicatif des actuateurs respectifs (Act1 - Act4).
